# EUROPEAN PATENT SPECIFICATION

(11) **EP 2 855 992 B1**
(45) Date of publication and mention of the grant of the patent: **18.05.2016**
(21) Application number: 13737368.4
(22) Date of filing: 04.06.2013
(51) Int. Cl.: F16L 9/147, F16L 57/06, B65G 53/32, B65G 53/52

(54) **PIPE FOR ABRASIVE MATERIALS, SUCH AS CONCRETE OR SIMILAR MATERIALS, AND METHOD OF PRODUCTION**
ROHR FÜR SCHEUERMATERIALIEN WIE BETON ODER ÄHNLICHE MATERIALIEN UND VERFAHREN ZUR HERSTELLUNG
TUYAU POUR MATÉRIAUX ABRASIFS TELS QUE DU CIMENT OU DES MATÉRIAUX SIMILAIRES ET PROCÉDÉ DE PRODUCTION

(30) Priority: 05.06.2012 IT MI20120973
(43) Date of publication of application: 08.04.2015
(73) Proprietor: Cifa S.P.A., 20030 Senago, Milano (IT)
(72) Inventor: FERRE', Fabio, 23017 Morbegno (IT); MOTTARELLA, Domenico, 23013 Cosio Valtellino (IT); MAINI, Paolo, Dario, 20851 Lissone (IT); MANTINEO, Massimo, 20023 Cerro Maggiore (IT)
(74) Representative: Petraz, Davide Luigi
(86) International application number: PCT/IB2013/001152
(87) International publication number: WO 2013/182884

(56) References cited:
- DE-A1- 10 324 321
- DE-A1-102006 007 203
- DE-B3-102006 001 315

## Description

### FIELD OF THE INVENTION

The present invention concerns a pipe to convey and discharge materials in powder and granules of various sizes, having great abrasive properties, such as concrete or similar materials.

The invention is applied for example, but not only, in truck mixers, truck-mounted pumps or suchlike, to discharge concrete starting from a pumping unit to a delivery point.

Here and hereafter in the description and claims, the word pipe shall include both pipes having a substantially longitudinal development and also curved pipes.

The present invention also concerns the method to produce the pipe.

### BACKGROUND OF THE INVENTION

Pipes are known, that are used to convey abrasive materials, for example concrete or suchlike, from a pumping zone to a delivery point. Such pipes, the internal surface of which is subjected to the effect of a continuous sliding by the abrasive concrete, are normally made of metal material, possibly subjected to surface heat treatments to increase their resistance to wear.

The heat treatments usually used are surface hardening, case hardening, nitriding or other.

These pipes have the disadvantage that they are very heavy, and therefore go against the requirement of making the pipes lighter. Lighter pipes are required, for example, for application on articulated arms, truck-mounted pumps or other, which have the opposite requirement of being longer and longer, while still respecting the limits of weight and bulk as laid down by the regulations.

Pipes are also known that comprise an internal layer of great hardness and hence high resistance to wear, and a more external layer made of non-metal material and resistant to shocks.

It is therefore possible to obtain a good resistance to wear in the internal part and a good mechanical resistance and resistance to shocks in the external part, and thus to guarantee, at the same time, resistance to flexional loads to which the pipe is subjected due to its own weight and that of the concrete transiting inside it, and the pressure exerted by the concrete during pumping.

EP 1.629.196 discloses a pipe for concrete comprising a tubular internal body, which constitutes a wear layer, made by molding liquid urethane. On the outside of the urethane tube, once the molding and solidification process is complete, a covering of composite material is applied, in particular consisting of fiber filaments, such as glass fiber, carbon fiber, or other synthetic fiber. The technique adopted for applying said fibers is filament winding.

The pipe is completed by applying metal flanges to the ends. The flanges are made solid with the ends of the tube using a quantity of urethane adhesive between the surfaces, parallel to each other, of the flange and the external covering of the pipe, which is made of fiber.

This known solution has some disadvantages.

The urethane internal layer performs its function of resistance to wear but has little mechanical resistance and in particular little resistance to the high internal pressures to which the pipe is subjected during use; because of this, it is necessary to provide great thicknesses of the external layer of fibers, with a consequent increase in the weight of the pipe and the production times.

Furthermore, the step of making the urethane internal layer is particularly complex and expensive in terms of production time and costs.

Another disadvantage is that, in correspondence with the terminal ends of the pipe, there is great turbulence of the concrete in transit therein, which entails great wear on the end portions.

Given that the flanges are associated to the pipe by gluing, as soon as the process of wear has caused the urethane internal layer to deteriorate, the flanges are suddenly detached, with consequent problems in the transfer of the abrasive material in transit.

DE 10 2006 007 203 A1, which corresponds to the preamble of claim 1, describes a pipe comprising an internal tube made of metal, an intermediate sealing layer made of rubber and an external sheath made of composite material. The pipe also comprises a flange applied to its ends, and has a collar that is applied from the outside onto the sheath made of composite material and glued to it by means of an adhesive layer. The flange has inside it a ring-type insert that couples with the end of the pipe and defines an abutment step to define the correct positioning of the flange with respect to the pipe. The material that the ring-type insert is made of is not indicated in the document.

DE 10 2006 001 315 B3 describes a pipe comprising an internal layer and an external layer, both made of metal material and separated from each other by an interstice. At the ends of the internal layer and external layer flanges are welded, which have inside them wear rings, the internal edge of which is disposed flush with the internal edge of the metal pipe.

One purpose of the present invention is to obtain and perfect a method to make a pipe for transferring abrasive material, such as concrete, which is light and at the same time has resistance to wear and mechanical resistance at least comparable to, if not better than, common pipes made of metal material.

Another purpose of the present invention is to obtain a pipe for transferring concrete that is simple and economical to produce.

The Applicant has devised, tested and embodied the present invention to overcome the shortcomings of the state of the art and to obtain these and other purposes and advantages.

### SUMMARY OF THE INVENTION

The present invention is set forth and characterized in the independent claims, while the dependent claims describe other characteristics of the invention or variants to the main inventive idea.

In accordance with the above purposes, a pipe for transferring abrasive material, such as for example but not only, concrete, comprises at least a tubular body provided with at least one end on which a flange is mounted, for the connection of other pipes. The flange has a substantially tubular shape and is provided with an internal surface which couples with at least part of the tubular body.

The tubular body comprises a first internal layer of a tubular shape and made of metal anti-wear material, and a second external layer made of a composite material provided with fibers wound on the external surface of the first internal layer and drowned in a polymer resin.

According to the present invention, the flange is mounted on the tubular body so as to have an end portion protruding externally with respect to the end of the tubular body. Furthermore, an annular element made of an anti-wear material is associated to the internal surface of the end portion of the flange.

In this way, the annular anti-wear element disposed in correspondence with the end of the pipe, prevents the turbulence generated in this zone from damaging the internal surface of the tubular body, wearing it and putting it out of use in a short time. Indeed, it is known that the ends of the pipes are subject in this zone to great turbulence, which is translated into wear on these parts.

According to another feature of the present invention, the annular anti-wear element has a first internal diameter smaller than a second internal diameter of the tubular body. In this way, the annular element has an internal diameter smaller than the internal diameter of the tubular body so that it defines, on the internal surface of the tubular body, a shoulder with the function of diverting the flow of abrasive material toward the central part of the pipe. This allows to prevent the material from wearing the interface zone between the tubular body and the annular element.

The solution that provides the first internal layer of anti-wear metal covered by an external layer of composite material is advantageous with regard to the overall weight of the pipe, because the first layer constitutes a layer resistant to wear for the abrasive material that is conveyed. The second layer, which surrounds the first layer, has the function of conferring on the pipe resistance to impacts and internal pressures to which it is subjected during use.

Furthermore, providing an external layer of fibers allows to reduce the overall weight of the pipe compared with a pipe made completely of metal material.

According to another feature, the flange is mounted with its internal surface on the external surface of the internal layer of the tubular body. The annular anti-wear element therefore finds itself in direct contact with the first internal layer of the tubular body, thus defining an internal surface of the pipe completely made of anti-wear material.

According to another feature, the flange is provided, on its external surface, with at least one groove in which the fibers of the second external layer are wound, which provide to make the flange solid with the tubular body to prevent its axial detachment.

Given that the end portion of the pipe is more subjected to wear because of the turbulence that is generated, in some forms of embodiment of the present invention it is provided that the annular element is made of metal material having greater properties of resistance to wear than those of the first internal layer.

The present invention also concerns a method to make a pipe for transferring abrasive material as described above.

### BRIEF DESCRIPTION OF THE DRAWINGS

These and other characteristics of the present invention will become apparent from the following description of a preferential form of embodiment, given as a non-restrictive example with reference to the attached drawings wherein:
- fig. 1 is a schematic representation of a longitudinal section of a pipe for abrasive materials according to the present invention;
- fig. 2 is an enlarged view of a detail in fig. 1;
- fig. 3 is a schematic representation of a longitudinal section of a pipe for abrasive materials according to the present invention.

To facilitate comprehension, the same reference numbers have been used, where possible, to identify identical common elements in the drawings. It is understood that elements and characteristics of one form of embodiment can conveniently be incorporated into other forms of embodiment without further clarifications.

### DETAILED DESCRIPTION OF SOME FORMS OF EMBODIMENT

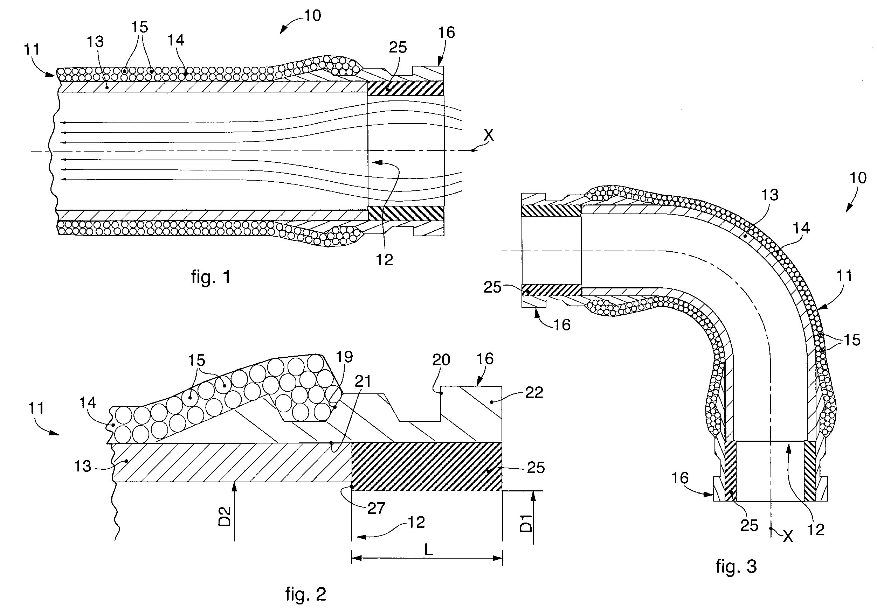

With reference to fig. 1, a pipe for transferring abrasive materials, such as for example concrete, is indicated in its entirety by the reference number 10, and comprises a tubular body 11 with a substantially circular section and a substantially longitudinal development, provided with a first end 12 and a second end, not shown in the drawings.

In the form of embodiment shown in fig. 1, the tubular body 11 develops longitudinally along an axis X, in this case rectilinear (fig. 1).

The present invention is also applied to curved pipes, that is, where the tubular body 11 develops according to a curved axis X (fig. 3). The same considerations made for pipes with a rectilinear axis (X) also apply to this solution.

The tubular body 11 in this case has a substantially circular section although, in other forms of embodiment, it may have different shapes such as rectangular, polygonal, elliptical.

According to another variant form of embodiment, the present invention is also applied to pipes, rectilinear or curved, that have a cross section that narrows progressively or according to portions of the pipe constant in segments, along the longitudinal extension of the pipe.

The tubular body 11 comprises a first internal layer, or metal layer 13, and a second external layer, or covering layer 14.

The metal layer 13 is made in this case of hardened steel with great resistance to wear. By way of example only, the metal layer 13 has a hardness comprised between 60 HRC and 70 HRC.

The metal layer 13 is defined by a tube having a uniform thickness along the entire longitudinal extension.

The thickness of the metal layer 13 is comprised for example between 1.5mm and 3.5mm.

As well as having an anti-wear function for the abrasive material that is made to transit in the pipe, the metal layer 13 also has the function of partly absorbing the loads induced by the internal pressure of the concrete, and this allows to reduce the thickness of the material used for making the covering layer 14.

The covering layer 14 wound around the metal layer 13 has the function of conferring on the pipe 10 a greater resistance to shocks against the metal layer 13, and to contribute, together with the latter, to the resistance of the internal pressure exerted by the abrasive material in transit.

The covering layer 14 comprises a plurality of fibers 15 wound around the metal layer 13 and immersed in a binding resin, such as an epoxy resin, urethane resin, polyester resin.

The fibers 15 are chosen from a group comprising glass fibers, basalt fibers, ceramic fibers, carbon fibers, metal fibers, natural fibers or a combination thereof.

The fibers 15 are wound in a crisscross manner and around the metal layer 13, with an angle of inclination comprised between 45° and 65° with respect to the axis X of the pipe 10. The winding angle is the best compromise between the need to resist both axial loads and circumferential loads.

The fibers 15 are wound on the metal layer 13 using filament winding techniques.

The pipe 10 thus made allows to obtain a pipe with mechanical resistance and resistance to internal pressure which, by way of example only, is comprised between about 140-170 bar.

Each of the ends of the tubular body 11, in this case the first end 12, is provided with a coupling flange 16 that allows to connect other pipes to it, for example by clamping joints.

The flange 16 is defined by a tubular element having its external surface shaped so as to define at least two circumferential grooves, respectively a first groove 19 and a second groove 20.

The first groove 19 allows to attach the flange 16 solidly to the tubular body 11 by winding in it a plurality of fibers 15.

The second groove 20 instead allows to mount a coupling joint for connecting another pipe.

During the step of coupling to the tubular body 11, the flange 16 is preliminarily coupled to the latter by mechanical interference.

Subsequently, when the covering layer 14 is made, the fibers 15 are wound around the external surface of the metal layer 13, and around an external portion of the flange 16.

The fibers 15 wound inside the first groove 19 constrain the axial position of the flange 16 with respect to the tubular body 11, and prevent the flange 16 from detaching during use.

The flange 16 is provided with an internal coupling surface 21, partly coupled with the metal layer 13.

In fact, the flange 16 is mounted on the metal layer 13 so as to protrude with an end portion 22 with respect to the terminal end of the metal layer 13, and allow an annular anti-wear element 25 to be housed inside.

The annular element 25 is inserted by interference into the internal surface 21 of the flange 16 and is made to abut against the terminal part of the metal layer 13.

The annular element 25 extends inside the flange for a length L comprised between 20mm and 80mm. These ranges of length L are the result of a good compromise between its function of protecting the metal layer 13, and the overall weight of the pipe 10 which in any case must be limited.

The length L of the annular element 25 is a function of the degree of turbulence to which the pipe is subjected, whether it is rectilinear or curved.

For example, in the case of a curved pipe (fig. 3), the length of the annular element 25 varies increasingly as the amplitude of the angle of curve of the bend diminishes. So, for example, the annular element 25 of a 90° bend will be less long than that of a 45° bend. In this way it is possible to optimize the pipe 10 both in terms of weight and of performance.

The annular element 25 is made of anti-wear material, by way of example only, carbides, or other metal materials having greater resistance to wear than that of the metal layer 13.

The annular element 25 is attached to the internal surface 21 of the flange 16 by mechanical interference even though, in other forms of embodiment, mechanical attachment means can be provided between the flange 16 and the tubular body 11.

The annular element 25 has a first internal diameter D1 that is smaller than a second internal diameter D2 of the metal layer 13.

This form of embodiment allows to screen the flow of concrete in correspondence with the discontinuity between the annular element 25 and the metal layer 13. In correspondence with the ends of the pipe it has been shown empirically that the flow of concrete is subjected to particularly serious turbulence, which damages the internal surface of the pipe 10.

The difference in diameter of the metal layer 13 and the annular element 25 allows to define a shoulder 27 with the function of diverting the flow of abrasive material and preventing it from directly damaging the metal layer 13 in correspondence with the interface between the two parts.

The present invention also concerns the method to make a pipe 10.

The method provides a first step in which the flanges 16 are associated, for example by interference, to the first 12 and second end of the metal layer 13. During this step, the flanges 16 are positioned so as to protrude from the terminal end of the metal layer 13 with its end portion 22.

A second step provides to make the covering layer 14 on the external surface of the tubular body 11 and the flange 16, by winding fibers 15 using filament winding techniques.

The fibers 15 are also wound in the first groove 19 to make the flanges 16 solid with the tubular body 11.

During the second step it is also provided to polymerize the resin in which the fibers 15 are drowned.

A third step is also provided in which the annular element 25 is associated with the internal surface 21 of the flange 16.

The third step can be carried out before the first step, before the flange 16 is inserted onto the metal layer 13, or after the second step, once the flange 16 and the tubular body 11 have been coupled.

It is clear that modifications and/or additions of parts may be made to the pipe for transferring abrasive material, and the corresponding method of production as described heretofore, without departing from the field and scope of the present invention.

## Claims

1. Pipe for transferring abrasive material, such as concrete, comprising at least a tubular body (11) comprising a first internal layer (13) of a tubular shape and made of metal anti-wear material, and a second external layer (14) made of composite material, said tubular body (11) being provided with at least one end (12) on which a flange (16) is mounted for the connection of other pipes, said flange (16) having a substantially tubular shape and being provided with an internal surface (21) which couples with at least part of said tubular body (11), wherein said flange (16) is mounted on said tubular body (11) so as to have an end portion (22) protruding externally with respect to said end (12) of said tubular body (11), wherein an annular element (25) made of anti-wear material is associated to said internal surface (21) of said end portion of the flange (16), **characterized in that** said annular element has greater resistance to wear than that of the first internal layer (13) **and in that** said flange (16) has means to attach it to said tubular body (11) by at least partly winding said second external layer (14).

2. Pipe as in claim 1, **characterized in that** said annular element (25) has a first internal diameter (D1) smaller than a second internal diameter of said tubular body (11), wherein said difference between the diameters defines a shoulder (27) facing toward the inside of the pipe (10) with the function of diverting the flow of abrasive material.

3. Pipe as in claim 1 or 2, **characterized in that** said annular element (25) extends inside said flange (16) for a length (L) comprised between 20mm and 80mm.

4. Pipe as in any claim hereinbefore, **characterized in that** said second external layer (14) is provided with fibers (15) wound on the external surface of said first internal layer (13) and drowned in a polymeric resin.

5. Pipe as in claim 4, **characterized in that** said flange (16) is mounted with its internal surface (21) on the external surface of said first internal layer (13), **and in that** said flange (16) is provided, on its external surface, with at least one groove (19) in which said fibers (15) of said second external layer (14) are wound, to make said flange (16) solid with said tubular body (11).

6. Pipe as in any claim hereinbefore, **characterized in that** said tubular body (11) extends along a rectilinear axis (X).

7. Pipe as in any claim from 1 to 5, **characterized in that** said tubular body (11) extends along a curved axis (X).

8. Pipe as in any claim hereinbefore, **characterized in that** said tubular body (11) has a cross section with sizes which narrow along its longitudinal extension.

9. Method to make a pipe for transferring abrasive material, such as concrete, comprising at least the manufacture of a tubular body (11) comprising a first internal layer (13) made of metal material and provided with at least one end (12) on which a flange (16) is mounted for the connection of other pipes, said flange (16) having a substantially tubular shape and being provided with an internal surface (21) which couples with at least part of said tubular body (11), and the winding of a composite material to form a second external layer (14) around said first internal layer (13), wherein said flange (16) is mounted on said tubular body (11) so as to protrude with an end portion (22) with respect to said end (12) of said tubular body (11), wherein an annular element (25) made of anti-wear material having greater resistance to wear than that of said first internal layer (13) is associated to the internal surface (21) of said flange (16) in its end portion (22), wherein said flange (16) is associated to the first internal layer (13) made of metal material before the composite material is wound to form the second external layer (14), so that said second external layer (14) also partly winds around said flange (16), constraining it to the tubular body (11).

## Patentansprüche

1. Rohr zur Überführung von Scheuermaterial, wie Beton, umfassend zumindest einen rohrförmigen Körper (11), der eine erste Innenlage (13) mit rohrförmiger Form umfasst und aus einem metallischen verschleißfesten Material besteht, und eine zweite Außenlage (14) aus einem Verbundwerkstoff, wobei der genannte rohrförmige Körper (11) mit zumindest einem Ende (12) versehen ist, an dem ein Flansch (16) zur Verbindung von anderen Rohren montiert ist, wobei der genannte Flansch (16) eine im Wesentlichen rohrförmige Form aufweist und mit einer Innenfläche (21) versehen ist, die mit zumindest einem Teil des genannten rohrförmigen Körpers (11) gekoppelt ist, worin der genannte Flansch (16) am genannten rohrförmigen Körper (11) montiert ist, so dass er einen Endabschnitt (22) aufweist, der nach außen im Hinblick auf das genannte Ende (12) des genannten rohrförmigen Körpers (11) hervorsteht, worin ein ringförmiges Element (25) aus einem verschleißfesten Material mit der genannten Innenfläche (21) des genannten Endabschnitts des Flansches (16) verbunden ist, **dadurch gekennzeichnet, dass** das genannte ringförmige Element eine größere Verschleißfestigkeit als diejenige der ersten Innenlage (13) aufweist, **und dass** der genannte Flansch (16) Mittel aufweist, um ihn an dem genannten rohrförmigen Körper (11) zu befestigen, indem die genannte zweite Außenlage (14) zumindest teilweise gewickelt wird.

2. Rohr nach Anspruch 1, **dadurch gekennzeichnet, dass** das genannte ringförmige Element (25) einen ersten Innendurchmesser (D1) aufweist, der kleiner als ein zweiter Innendurchmesser des genannten rohrförmigen Körpers (11) ist, worin der genannte Unterschied zwischen den Durchmessern eine Schulter (27) definiert, die in Richtung auf das Innere des Rohres (10) zugewandt ist, mit der Funktion, den Fluss des Scheuermaterials umzulenken.

3. Rohr nach Anspruch 1 oder 2, **dadurch gekennzeichnet, dass** das genannte ringförmige Element (25) sich innerhalb des genannten Flansches (16) über eine Länge (L) von 20 mm bis 80 mm erstreckt.

4. Rohr nach einem der vorhergehenden Ansprüche, **dadurch gekennzeichnet, dass** die genannte zweite Außenlage (14) mit Fasern (15) versehen ist, die an der Außenfläche der genannten ersten Innenlage (13) gewickelt und in einem Polymerharz eingebettet sind.

5. Rohr nach Anspruch 4, **dadurch gekennzeichnet, dass** der genannte Flansch (16) mit seiner Innenfläche (21) an der Außenfläche der genannten ersten Innenlage (13) montiert ist, **und dass** der genannte Flansch (16), an seiner Außenfläche, mit zumindest einer Nut (19) versehen ist, in der die genannten Fasern (15) der genannten zweiten Außenlage (14) gewickelt sind, um den genannten Flansch (16) mit dem genannten rohrförmigen Körper (11) fest zu verbinden.

6. Rohr nach einem der vorhergehenden Ansprüche, **dadurch gekennzeichnet, dass** der genannte rohrförmige Körper (11) sich entlang einer geradlinigen Achse (X) erstreckt.

7. Rohr nach einem der Ansprüche 1 bis 5, **dadurch gekennzeichnet, dass** der genannte rohrförmige Körper (11) sich entlang einer gekrümmten Achse (X) erstreckt.

8. Rohr nach einem der vorhergehenden Ansprüche, **dadurch gekennzeichnet, dass** der genannte rohrförmige Körper (11) einen Querschnitt aufweist, dessen Abmessungen entlang seines Längsverlaufs enger werden.

9. Verfahren zur Herstellung eines Rohrs zur Überführung von Scheuermaterial, wie Beton, umfassend zumindest die Fertigung eines rohrförmigen Körpers (11), der eine erste Innenlage (13) aus einem metallischen Material umfasst und mit zumindest einem Ende (12) versehen ist, an dem ein Flansch (16) zur Verbindung von anderen Rohren montiert ist, wobei der genannte Flansch (16) eine im Wesentlichen rohrförmige Form aufweist und mit einer Innenfläche (21) versehen ist, die mit zumindest einem Teil des genannten rohrförmigen Körpers (11) gekoppelt ist, und die Wicklung eines Verbundwerkstoffs zur Bildung einer zweiten Außenlage (14) um die genannte erste Innenlage (13), worin der genannte Flansch (16) am genannten rohrförmigen Körper (11) montiert ist, so dass er mit einem Endabschnitt (22) im Hinblick auf das genannte Ende (12) des genannten rohrförmigen Körpers (11) hervorsteht, worin ein ringförmiges Element (25) aus einem verschleißfesten Material mit einer größeren Verschleißfestigkeit als derjenigen der genannten ersten Innenlage (13) mit der Innenfläche (21) des genannten Flansches (16) an dessen Endabschnitt (22) verbunden ist, worin der genannte Flansch (16) mit der ersten Innenlage (13) aus Metallmaterial verbunden ist, bevor der Verbundwerkstoff gewickelt wird, um die zweite Außenlage (14) zu bilden, so dass die genannte zweite Außenlage (14) auch teilweise um den genannten Flansch (16) gewickelt wird, wodurch dieser an dem rohrförmigen Körper (11) festgeklemmt wird.

## Revendications

1. Tuyau pour le transfert d'un matériau abrasif, tel que du ciment, comprenant au moins un corps tubulaire (11) comprenant une première couche interne (13) de forme tubulaire et composée d'un matériau métallique anti-usure et une seconde couche externe (14) composée d'un matériau composite, ledit corps tubulaire (11) étant pourvu d'au moins une extrémité (12) sur laquelle une bride (16) est montée pour le raccordement d'autres tuyaux, ladite bride (16) présentant une forme sensiblement tubulaire et étant pourvue d'une surface interne (21) s'accouplant à au moins une partie dudit corps tubulaire (11),
dans lequel ladite bride (16) est montée sur ledit corps tubulaire (11) de façon à présenter une partie extrémité (22) faisant saillie vers l'extérieur par rapport à ladite extrémité (12) dudit corps tubulaire (11), dans lequel un élément annulaire (25) composé d'un matériau anti-usure est associé à ladite surface interne (21) de ladite partie extrémité de la bride (16), **caractérisé en ce que** ledit élément annulaire présente une résistance à l'usure supérieure à celle de la première couche interne (13)
**et en ce que** ladite bride (16) présente un moyen de fixation audit corps tubulaire (11) par enroulement au moins partiellement de ladite seconde couche externe (14).

2. Tuyau selon la revendication 1, **caractérisé en ce que** ledit élément annulaire (25) présente un premier diamètre intérieur (D1) inférieur à un second diamètre intérieur dudit corps tubulaire (11), dans lequel ladite différence entre les diamètres définit un épaulement (27) orienté vers l'intérieur du tuyau (10), ayant la fonction de dévier le flux de matériau abrasif.

3. Tuyau selon la revendication 1 ou 2, **caractérisé en ce que** ledit élément annulaire (25) s'étend à l'intérieur de ladite bride (16) sur une longueur (L) comprise entre 20 mm et 80 mm.

4. Tuyau selon n'importe laquelle des revendications précédentes, **caractérisé en ce que** ladite seconde couche externe (14) est pourvue de fibres (15) enroulées sur la surface externe de ladite première couche interne (13) et noyées dans une résine polymère.

5. Tuyau selon la revendication 4, **caractérisé en ce que** ladite bride (16) est montée avec sa surface interne (21) sur la surface externe de ladite première couche interne (13) et **en ce que** ladite bride (16) est pourvue, sur sa surface interne, d'au moins une rainure (19) dans laquelle lesdites fibres (15) de ladite seconde couche externe (14) sont enroulées, pour rendre ladite bride (16) solidaire dudit corps tubulaire (11).

6. Tuyau selon n'importe laquelle des revendications précédentes, **caractérisé en ce que** ledit corps tubulaire (11) s'étend le long d'un axe rectiligne (X).

7. Tuyau selon n'importe laquelle des revendications 1 à 5, **caractérisé en ce que** ledit corps tubulaire (11) s'étend le long d'un axe courbe (X).

8. Tuyau selon n'importe laquelle des revendications précédentes, **caractérisé en ce que** ledit corps tubulaire (11) présente une section transversale dont les dimensions se rétrécissent le long de son étendue longitudinale.

9. Procédé de réalisation d'un tuyau pour le transfert d'un matériau abrasif, tel que du ciment, comportant au moins la fabrication d'un un corps tubulaire (11) comprenant une première couche interne (13) composée d'un matériau métallique et pourvu d'au moins une extrémité (12) sur laquelle une bride (16) est montée pour le raccordement d'autres tuyaux, ladite bride (16) présentant une forme sensiblement tubulaire et étant pourvue d'une surface interne (21) s'accouplant à au moins une partie dudit corps tubulaire (11), et l'enroulement d'un matériau composite pour former une seconde couche externe (14) autour de ladite première couche interne (13), dans lequel
ladite bride (16) est montée sur ledit corps tubulaire (11) de façon à faire saillie avec une partie extrémité (22) par rapport à ladite extrémité (12) dudit corps tubulaire (11), dans lequel un élément annulaire (25) composé d'un matériau anti-usure présentant une résistance à l'usure supérieure à celle de ladite première couche interne (13) est associé à la surface interne (21) de ladite bride (16) dans sa partie extrémité (22), dans lequel
ladite bride (16) est associée à la première couche interne (13) en matériau métallique avant que le matériau composite ne soit enroulé pour former la seconde couche externe (14), de façon que ladite seconde couche externe (14) soit aussi partiellement enroulée autour de ladite bride (16), et lie celle-ci au corps tubulaire (11).
